# EUROPEAN PATENT APPLICATION

(11) **EP 3 267 068 A1**
(43) Date of publication of application: **10.01.2018**
(21) Application number: 16758901.9
(22) Date of filing: 01.03.2016
(51) Int. Cl.: F16F 9/32, B62J 99/00, B62K 25/08

(54) **SHOCK ABSORBER**

(30) Priority: 02.03.2015 JP 2015040447
(71) Applicant: KYB Corporation, Tokyo 105-6111 (JP)
(72) Inventor: ITO, Naoki, Tokyo 105-6111 (JP)
(74) Representative: Müller-Boré & Partner Patentanwälte PartG mbB
(86) International application number: PCT/JP2016/056185
(87) International publication number: WO 2016/140208

(57) **Abstract**

Providing a shock absorber including a sensor accurately detecting a position of a cylinder relative to a piston rod. The shock absorber includes a cylinder (10), a piston (20), a piston rod (30), and a sensor (90). The piston (20) is inserted into the cylinder (10) thereby to divide an interior of the cylinder (10) into a rod-side chamber (11) and a piston-side chamber (13) . The piston is axially moved in the cylinder (10) . The piston rod (30) has an end connected to the piston (20) and protrudes out of the cylinder (10) . The sensor (90) is disposed in the piston rod (30). The sensor (90) detects a position of the cylinder (10) relative to the piston rod (30).

## Description

### Technical Field

The present invention relates to a shock absorber.

### Background Art

Patent Document 1 discloses a conventional shock absorber. This shock absorber includes a cylinder, a piston, a piston rod, and a sensor. The piston is inserted into the cylinder to be axially movable therein. The piston divides an interior of the cylinder into a rod-side chamber and a piston-side chamber. The piston rod has an end connected to the piston and extends on a central axis of the cylinder, protruding out of the cylinder. The piston rod is cylindrical in shape and has a central hole extending therethrough on a central axis thereof. The piston is provided with a through hole coaxial with the central hole of the piston rod. The sensor has a body and a rod part. The body of the sensor is fixed to an end of the cylinder (the end opposed to the other end through which the piston rod protrudes). The rod part of the sensor extends in the cylinder on the central axis of the cylinder to be slidably inserted into the through hole of the piston and the central hole of the piston rod. The sensor can detect the length of the rod part inserted into the through hole of the piston and the central hole of the piston rod.

Thus, this shock absorber does not require any extra mounting space when to be mounted on other equipment since the sensor is built therein. Furthermore, since this shock absorber detects an expansion/contraction amount by the sensor and performs adjustment of a damping force or the like, this shock absorber can execute a feedback control or the like according to the expansion/contraction amount.

### Prior Art Document

### Patent Documents

Patent Document 1: Japanese Patent Application Publication No. JP 2010-12835

### Summary of the Invention

### Problem to Be Overcome by the Invention

In the shock absorber of Patent Document 1, however, the rod part of the sensor extends in the cylinder to be inserted into the through hole of the piston and the central hole of the piston rod. Accordingly, when a moving direction of the piston and the piston rod is shifted relative to an extending direction of the rod part of the sensor during expansion/contraction of the shock absorber, the rod part collides against the through hole of the piston and the central hole of the piston rod, with the result that the rod part would be broken, for example, would be bent. When the rod part of the sensor is broken, the shock absorber cannot accurately detect the expansion/contraction amount.

The present invention was made in view of the above-described circumstances in the conventional art and has an object to provide a shock absorber including a sensor accurately detecting the position of the cylinder relative to the piston rod.

### Means for Overcoming the Problem

The shock absorber of the present invention includes a cylinder, a piston, a piston rod, and a sensor. The piston is inserted into the cylinder thereby to divide an interior of the cylinder into a rod-side chamber and a piston-side chamber. The piston is axially moved in the cylinder. The piston rod has an end connected to the piston and protrudes out of the cylinder. The sensor is disposed in the piston rod. The sensor detects a position of the cylinder relative to the piston rod.

The shock absorber of the present invention may further include a rod guide. The rod guide is provided in an open end of the cylinder and having a through hole through which the piston rod is inserted to be axially movable. The rod guide has a detected object built therein. The detected object is detected by the sensor.

The sensor of the shock absorber of the present invention may detect the position of the cylinder over an entire movement range of the cylinder relative to the piston rod.

### Brief Description of the Drawings

Fig. 1 is a schematic sectional view of a shock absorber of a first embodiment;
Fig. 2 is a schematic sectional view of a shock absorber of a second embodiment; and
Fig. 3 is a schematic sectional view of a shock absorber of another embodiment.

### Best Mode for Carrying Out the Invention

First and second embodiments of the shock absorber of the present invention will be described with reference to the drawings.

### <First Embodiment>

A shock absorber of the first embodiment is used in a front fork suspending a front wheel of a motor cycle or the like. The shock absorber includes a cylinder 10, a piston 20, a piston rod 30, a rod guide 40, an extended spring 50, a bracket 60, an inner tube 70, an outer tube 75, a cap 80, a main spring 55, and a sensor 90.

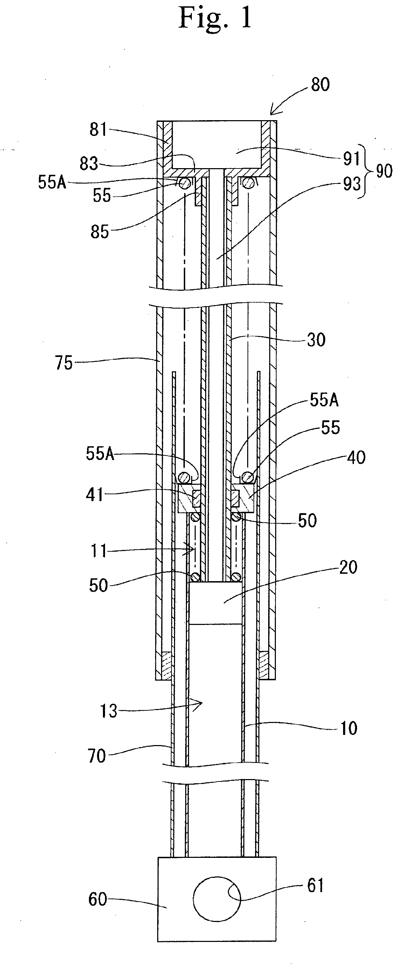

The cylinder 10 is cylindrical in shape. The cylinder 10 has an end (a lower end as viewed in Fig. 1) connected to a bracket 60 which will be described later. The piston 20 is columnar in shape. The piston 20 is inserted into the cylinder 10. The piston 20 divides an interior of the cylinder 10 into a rod-side chamber 11 and a piston-side chamber 13. The piston 20 is moved in an axial direction of the cylinder 10 while being in sliding contact with an inner peripheral surface of the cylinder 10 . The rod-side chamber 11 and the piston-side chamber 13 are filled with a hydraulic fluid. The rod-side chamber 11 and the piston-side chamber 13 communicate with each other via a flow path (not illustrated). The shock absorber generates a damping force by imparting resistance to the hydraulic fluid passing through the flow path.

The piston rod 30 is cylindrical in shape. The piston rod 30 is a strength member. The piston rod 30 has two ends one of which (a lower end of the piston rod 30 as viewed in Fig. 1) is connected to the piston 20. The piston rod 30 extends on a central axis of the cylinder 10, protruding out of the other end of the cylinder 10 (an upper end of the cylinder 10 as viewed in Fig. 1) . The other end of the piston rod 30 (an upper end of the piston rod 30 as viewed in Fig. 1) is connected to the cap 80 which will be described later, while being inserted into a connecting part 85 of the cap 80.

The rod guide 40 is connected to an open end (an upper end of the cylinder 10 as viewed in Fig. 1) which is the other end of the cylinder 10. The rod guide 40 is annular in shape. The rod guide 40 has a central through hole through which the piston rod 30 is inserted to be axially movable. The rod guide 40 has a recess going around an inner peripheral surface of the through hole. An annular magnet 41 serving as a detected object is built in the recess of the rod guide 40. The magnet 41 has an inner diameter that substantially equals an inner diameter of the through hole of the rod guide 40.

The extended spring 50 is a compression coil spring. The extended spring 50 is disposed between the piston 20 and the rod guide 40 at an outer peripheral side of the piston rod 30. The extended spring 50 has an end fixed to the rod guide 40. When the piston rod 30 is moved in an exiting direction from the cylinder 10 with the result that the shock absorber is expanded by a predetermined amount, the extended spring 50 generates an elastic force between the piston 20 and the rod guide 40, thereby absorbing shock.

The bracket 60 is provided with an attaching hole 61 to be attached to a shaft member. The bracket 60 is connected to the one end side of the cylinder 10 as described above. The bracket 60 is also connected to an end of the inner tube 70 (a lower end of the inner tube 70 as viewed in Fig. 1) which will be described later.

The inner tube 70 is cylindrical in shape. The inner tube 70 is connected to the bracket 60 to be coaxial with the cylinder 10 and extends to cover the cylinder 10 and the rod guide 40. The inner tube 70 is moved together with the cylinder 10 when the shock absorber is expanded/contracted.

The outer tube 75 is cylindrical in shape and has a larger diameter than the inner tube 70. The outer tube 75 has two ends one of which (a lower end of the outer tube 75 as viewed in Fig. 1) is located outside the inner tube 70 even when the shock absorber is most expanded. In other words, the shock absorber is expanded/contracted while the one end of the outer tube 75 always overlaps the other end of the inner tube 70. The other end of the outer tube 75 (an upper end of the outer tube 75 as viewed in Fig. 1) is connected to the cap 80 in abutment against the cap 80 so as to cover an outer peripheral surface of the cap 80. The outer tube 75 is moved together with the cap 80, the piston rod 30, and the piston 20 when the shock absorber is expanded/contracted.

The cap 80 has a cylindrical part 81, a flat surface part 83 spreading inward from an end of the cylindrical part 81 (a lower end of the cylindrical part 81 as viewed in Fig. 1) and formed with a centrally located through hole, and a cylindrical connecting part 85 which is coaxial with the through hole and extends to the side opposite the cylindrical part 81. The cylindrical part 81 has an outer diameter that substantially equals an inner diameter of the outer tube 75. The connecting part 85 has an inner diameter that substantially equals the outer diameter of the piston rod 30.

The main spring 55 is a compression coil spring. The main spring 55 is disposed around the piston rod 30 and interposed via a spring receiving member 55A between the flat surface part 83 of the cap 80 and the rod guide 40. When the shock absorber is contracted, the main spring 55 generates an elastic force between the cap 80 and the rod guide 40, thereby absorbing shock.

The sensor 90 includes a sensor body 91 and a sensor probe 93 extending from the sensor body 91. The sensor body 91 is disposed in the cap 80 to be fixed therein. The sensor probe 93 is inserted through the piston rod 30 and has a distal end inserted into the piston 20 so that the distal end is prevented from protruding from a distal end surface of the piston 20 (a lower end surface as viewed in Fig. 1). The sensor 90 is a position sensor applying a magnetostriction phenomenon by magnetostriction effect. In other words, when the shock absorber is expanded/contracted, strain is generated in a magnetic field on the sensor probe 93 by the magnet 41 built in the rod guide 40 moved along the piston rod 30. The sensor 90 measures a propagation time of the generated strain by the sensor body 91, thereby detecting a position of the magnet 41 (a position of the rod guide 40) . Since the sensor probe 93 extends over an entire length of the piston rod 30, the sensor 90 can detect the position of the cylinder 10 over an entire movement range of the cylinder 10 relative to the piston rod 30. In other words, the piston rod 30 can continuously grasp expansion/contraction state of the shock absorber.

Thus, the shock absorber includes the cylinder 10, the piston 20, the piston rod 30, and the sensor 90. The piston 20 is inserted into the cylinder 10, dividing the interior of the cylinder 10 into the rod-side chamber 11 and the piston-side chamber 13. Furthermore, the piston 20 is moved in the axial direction of the cylinder 10. The piston rod 30 has one end connected to the piston 20 and protrudes out of the cylinder 10. The sensor 90 includes the sensor probe 93 disposed in the piston rod 30. The sensor 90 detects the position of the cylinder 10 relative to the piston rod 30.

Since the piston rod 30 of the shock absorber is the strength member, the sensor probe 93 of the sensor 90 disposed inside the piston rod of the shock absorber can be protected with the result that the sensor 90 can be prevented from being broken when the shock absorber is expanded/contracted or in another case.

Accordingly, the shock absorber of the first embodiment includes the sensor 90 which accurately detects the position of the cylinder 10 relative to the piston rod 30.

The shock absorber of the first embodiment further includes the rod guide 40. The rod guide 40 is provided on the open end of the cylinder 10 and has the through hole through which the piston rod 30 is inserted to be axially movable. The rod guide 40 further has the built-in magnet 41 serving as the detected object which is to be detected by the sensor 90. Thus, since the magnet 41 is built in the rod guide 40 which is a required component, no special structure needs to be added to the shock absorber for the purpose of disposition of the magnet 41, so that the shock absorber can be rendered simple in the structure thereby to be prevented from being increased in size.

Furthermore, the sensor 90 of the shock absorber of the first embodiment detects the position of the cylinder 10 over the entire movement range of the cylinder 10 relative to the piston rod 30. As a result, since expansion/contraction state of the shock absorber can continuously be grasped, a feedback control or the like can be executed in order to perform adjustment of the damping force of the shock absorber according to the expansion/contraction state.

### <Second Embodiment>

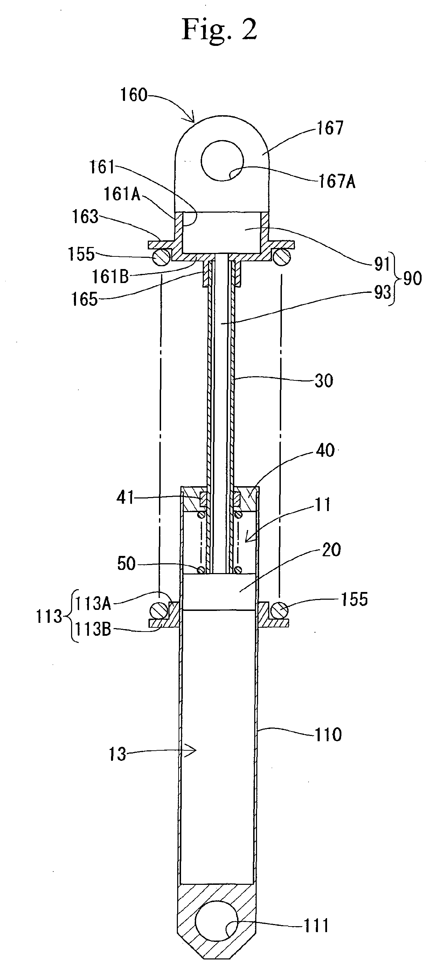

The shock absorber of a second embodiment is used in a rear cushion unit suspending a rear wheel of a motor cycle or the like as illustrated in Fig. 2. Identical or similar parts in the second embodiment are labeled by the same reference symbols as those in the first embodiment and detailed description of these parts will be eliminated.

The shock absorber includes a cylinder 110, the piston 20, the piston rod 30, the rod guide 40, the extended spring 50, a bracket 160, a main spring 155, and the sensor 90. The cylinder 110 is cylindrical in shape. The cylinder 110 has an end which is closed (a lower end of the cylinder 110 as viewed in Fig. 2) . The closed end of the cylinder 110 is provided with an attaching hole 111 to be attached to the shaft member. A flange 113 against which one end of the main spring 155 to be described later (a lower end of the main spring 155 as viewed in Fig. 2) abuts is fixed to an outer peripheral surface of the cylinder 110. The flange 113 includes a cylindrical part 113A which is fixed to the outer peripheral surface of the cylinder 110 and an annular abutment part 113B which spreads outward from one end of the cylindrical part 113A (a lower end of the cylindrical part 113A as viewed in Fig. 2) and against which the one end of the main spring 155 abuts.

The piston rod 30 is connected to the bracket 160 with the other end thereof (an upper end of the piston rod 30 as viewed in Fig. 2) being inserted into a connecting part 165 of the bracket 160. The bracket 160 includes a housing part 161 housing the sensor body 91, an annular flange 163 spreading outward from an outer peripheral surface of the housing part 161, a cylindrical connecting part 165 extending in one of two directions (downward as viewed in Fig. 2) from the housing part 161, and an attaching part 167 extending in the other direction (upward as viewed in Fig. 2). The housing part 161 has a cylindrical part 161A and a flat surface part 161B spreading inward from one end of the cylindrical part 161A (a lower end of the cylindrical part 161A as viewed in Fig. 2) and formed with a centrally located through hole. The connecting part 165 extends coaxially with the through hole of the flat surface part 161B of the housing part 161. The attaching part 167 is provided with an attaching hole 167A to be attached to a shaft member.

The main spring 155 is a compression coil spring. The main spring 155 is disposed around the piston rod 30 and a part of the cylinder 110 located at the side where the piston rod 30 protrudes and is interposed between the flange 113 of the cylinder 110 and the flange 163 of the bracket 160. When the shock absorber is contracted, the main spring 155 generates an elastic force between the cap 80 and the rod guide 40, thereby absorbing shock.

The sensor body 91 of the sensor 90 is housed in the housing part 161 of the bracket 160. Furthermore, the senor probe 93 of the sensor 90 is disposed inside the piston rod 30 to extend over an entire length of the piston rod 30. The sensor 90 is a position sensor applying a magnetostriction phenomenon by magnetostriction effect. Since the sensor probe 93 extends over the entire length of the piston rod 30, the sensor 90 can detect the position of the cylinder 110 over an entire movement range of the cylinder 110 relative to the piston rod 30. In other words, the piston rod 30 can continuously grasp expansion/contraction state of the shock absorber.

Thus, the shock absorber includes the cylinder 110, the piston 20, the piston rod 30, and the sensor 90. The piston 20 is inserted into the cylinder 110, dividing the interior of the cylinder 110 into the rod-side chamber 11 and the piston-side chamber 13. Furthermore, the piston 20 is moved in the axial direction of the cylinder 110. The piston rod 30 has one end connected to the piston 20 and protrudes out of the cylinder 110. The sensor 90 includes the sensor probe 93 disposed inside the piston rod 30. The sensor 90 detects the position of the cylinder 110 relative to the piston rod 30.

Since the piston rod 30 of the shock absorber is the strength member, the sensor probe 93 of the sensor 90 disposed inside the piston rod of the shock absorber can be protected by the piston rod 30 with the result that the sensor 90 can be prevented from being broken when the shock absorber is expanded/contracted or in another case.

Accordingly, the shock absorber of the second embodiment includes the sensor 90 which accurately detects the position of the cylinder 110 relative to the piston rod 30.

The shock absorber of the second embodiment further includes the rod guide 40. The rod guide 40 is provided in the open end of the cylinder 110 and has the through hole through which the piston rod 30 is inserted to be axially movable. The rod guide 40 further has the built-in magnet 41 serving as the detected object which is to be detected by the sensor 90. Thus, since the magnet 41 is built in the rod guide 40 which is a required component, no special structure needs to be added to the shock absorber for the purpose of disposition of the magnet 41, so that the shock absorber can be rendered simple in the structure thereby to be prevented from being increased in size.

Furthermore, the sensor 90 of the shock absorber of the second embodiment detects the position of the cylinder 110 over the entire movement range of the cylinder 110 relative to the piston rod 30. As a result, since expansion/contraction state of the shock absorber can continuously be grasped, a feedback control or the like can be executed in order to perform adjustment of the damping force of the shock absorber according to the expansion/contraction state.

### <Other Embodiments>

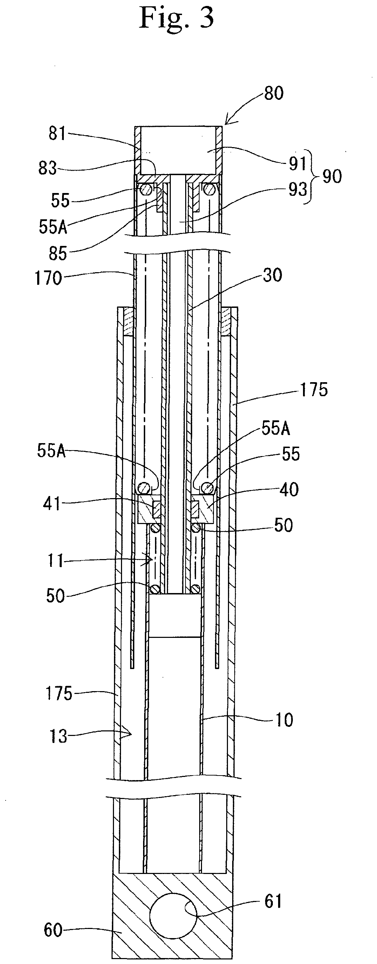

The present invention should not be limited to the first and second embodiments described above with reference to the drawings, but the technical scope of the invention encompasses the following embodiments, for example.
(1) Although the magnet serving as the detected object is built in the rod guide in each of the first and second embodiments, a new structure may be provided to dispose the detected object around the piston rod so that the detected object is not moved relative to the cylinder.
(2) In each of the first and second embodiments, the sensor is the position sensor applying a magnetostriction phenomenon by magnetostriction effect. However, the sensor may be a position sensor applying another principle.
(3) Although the sensor detects the position of the cylinder over the entire movement range of the cylinder relative to the piston rod in each of the first and second embodiments, the sensor may detect a predetermined position of the cylinder relative to the piston rod.
(4) The shock absorber is used in the front fork in the first embodiment and in the rear cushion unit in the second embodiment. However, the shock absorber may be used for other purposes.
(5) Although the extended spring is disposed between the piston and the rod guide in the first embodiment, the extended spring may be disposed between the outer tube and the inner tube.
(6) Although the extended spring is provided in each of the first and second embodiments, the extended spring may not be provided.
(7) Although the main spring is provided in each of the first and second embodiments, the main spring may not be provided.
(8) Although the inner tube is connected to the bracket and the outer tube is connected to the cap in the first embodiment, the inner tube 170 may be connected to or may be formed integrally with the cap 80 and the outer tube 175 may be connected to or may be formed integrally with the bracket 60, as illustrated in Fig. 3 (identical or similar parts in Fig. 3 are labeled by the same reference symbols as those in the first embodiment and detailed description of these parts will be eliminated).
(9) Although the main spring is interposed via the spring receiving member between the cap and the rod guide in the first embodiment, the main spring may be interposed between the cap and the rod guide without provision of the spring receiving member.
(10) Although one of the ends of the extended spring is fixed to the rod guide in the first embodiment, the one end may not be fixed to the rod guide but the other end of the extended spring may be fixed to the piston. Furthermore, neither ends of the extended spring may be connected to the rod guide or the piston.
(11) In the first embodiment, the cap has the connecting part extending to the side opposite the cylindrical part and the other end of the piston rod is inserted into the connecting part to be connected. However, the connecting part may be a recess formed by recessing the flat surface part into the cylindrical part and the other end of the piston rod may be inserted into the recess to be connected.
(12) Although the sensor probe is inserted into the piston in the first embodiment, the sensor probe just need to have a length extending to or beyond the piston side end surface of the magnet (the detected object) built in the rod guide in a most expanded state of the shock absorber, and extending not beyond the distal end surface of the piston (such a length that the distal end of the sensor probe does not protrude from the distal end surface of the piston) . Additionally, when the piston rod extends through the piston to protrude from the distal end surface of the piston, the sensor probe just need to have a length that is equal to or shorter than that of the piston rod.

### Explanation of Reference Symbols

10, 110 ... cylinder, 11 ... rod-side chamber, 13 ... piston-side chamber, 20 ... piston, 30 ... piston rod, 40 ... rod guide, 41 ... magnet (detected object), and 90 ... sensor.

## Claims

1. A shock absorber comprising:
a cylinder;
a piston inserted into the cylinder thereby to divide an interior of the cylinder into a rod-side chamber and a piston-side chamber, the piston being axially moved in the cylinder;
a piston rod having an end connected to the piston and protruding out of the cylinder; and
a sensor disposed in the piston rod to detect a position of the cylinder relative to the piston rod.

2. The shock absorber according to claim 1, further comprising a rod guide provided in an open end of the cylinder and having a through hole through which the piston rod is inserted to be axially movable, the rod guide having a detected object built therein, the detected object being detected by the sensor.

3. The shock absorber according to claim 1, wherein the sensor detects the position of the cylinder over an entire movement range of the cylinder relative to the piston rod.

4. The shock absorber according to claim 2, wherein the sensor detects the position of the cylinder over an entire movement range of the cylinder relative to the piston rod.
